# EUROPEAN PATENT APPLICATION

(11) **EP 4 804 270 A1**
(43) Date of publication of application: **09.09.2026**
(21) Application number: 24923688.6
(22) Date of filing: 07.11.2024
(51) Int. Cl.: H01M 10/052, H01M 4/36, H01M 4/38, H01M 4/48, H01M 4/505, H01M 10/0568, H01M 10/0569, H01M 50/109, H01M 50/153

(54) **NON-AQUEOUS ELECTROLYTE SECONDARY BATTERY**

(30) Priority: 09.02.2024 JP 2024018835
(71) Applicant: Seiko Instruments Inc., Chiba-shi, Chiba 261-8507 (JP)
(72) Inventor: ENDO Yusuke, Chiba-shi, Chiba 261-8507 (JP)
(74) Representative: Lewis Silkin LLP
(86) International application number: PCT/JP2024/039675
(87) International publication number: WO 2025/169556

(57) **Abstract**

A non-aqueous electrolyte secondary battery (1) includes a positive electrode (10) containing a lithium manganese oxide (LMO) as a positive electrode active material, a negative electrode (20) containing lithium (Li) and SiO_{X} (0 ≤ X < 2) as a negative electrode active material, and an electrolyte solution (50) containing an organic solvent and a supporting salt. A capacity balance represented by a capacity of the negative electrode and a capacity of the positive electrode {negative electrode capacity (mAh)/positive electrode capacity (mAh)} is in a range of 1.56 to 2.51. A molar ratio (Li/SiOx) of the lithium (Li) to the SiO_{X} (0 ≤ X < 2) in the negative electrode active material is in a range of 3.8 to 4.9. A molar ratio (Li/LMO) of the lithium (Li) to the lithium manganese oxide (LMO) is 8.0 or less.

## Description

### TECHNICAL FIELD

The present invention relates to a non-aqueous electrolyte secondary battery.

Priority is claimed on Japanese Patent Application No. 2024-18835, filed February 9, 2024, the content of which is incorporated herein by reference.

### BACKGROUND ART

A non-aqueous electrolyte secondary battery includes a positive electrode, a negative electrode, a separator interposed between the positive electrode and the negative electrode, and an electrolyte solution impregnated into the positive electrode, the negative electrode, and the separator, in a sealed housing container. The non-aqueous electrolyte secondary battery is used for a power supply unit of an electronic apparatus, a power storage unit of a power generation apparatus, and the like because of high energy density and light weight.

Patent Document 1 describes a composition of an organic solvent and a supporting salt used in an electrolyte solution. In addition, Patent Document 1 describes that a non-aqueous electrolyte secondary battery which maintains sufficient discharge capacity even under a low-temperature environment and is capable of operating over a wide temperature range by optimizing a configuration of a negative electrode active material is provided. In the non-aqueous electrolyte secondary battery described in Patent Document 2, the overdischarge characteristics are improved by increasing a concentration of the supporting salt in the electrolyte solution in the electrolyte solution system described in Patent Document 1.

### Citation List

### Patent Documents

Patent Document 1: PCT International Publication No. WO2016/143543
Patent Document 2: PCT International Publication No. WO2022/181207

### SUMMARY OF INVENTION

### Technical Problem

However, in the non-aqueous electrolyte secondary battery described in Patent Document 2, while an effect of improving the overdischarge characteristics is shown as the concentration of the supporting salt in the electrolyte solution increases, the discharge capacity itself tends to decrease as the concentration of the supporting salt increases.

An object of an aspect of the present invention is to provide a non-aqueous electrolyte secondary battery that can obtain sufficient discharge capacity and has excellent overdischarge characteristics.

### Solution to Problem

As a result of studies to solve the above-described problem, the present inventors have found that the discharge capacity can be increased and the overdischarge characteristics can be improved by optimizing a capacity balance between a negative electrode and a positive electrode, a molar ratio (Li/SiO_{X}) of lithium (Li) to SiO_{X} (0 ≤ X < 2) in a negative electrode active material, and a molar ratio (Li/LMO) of lithium (Li) to lithium manganese oxide (LMO).

A non-aqueous electrolyte secondary battery according to an aspect of the present invention includes a positive electrode containing a lithium manganese oxide (LMO) as a positive electrode active material; a negative electrode containing lithium (Li) and SiO_{X} (0 ≤ X < 2) as a negative electrode active material; and an electrolyte solution containing an organic solvent and a supporting salt, in which a capacity balance represented by a capacity of the negative electrode and a capacity of the positive electrode {negative electrode capacity (mAh)/positive electrode capacity (mAh)} is in a range of 1.56 to 2.51, a molar ratio (Li/SiO_{X}) of the lithium (Li) to the SiO_{X} (0 ≤ X < 2) in the negative electrode active material is in a range of 3.8 to 4.9, and a molar ratio (Li/LMO) of the lithium (Li) to the lithium manganese oxide (LMO) is 8.0 or less.

By setting the capacity balance between the negative electrode and the positive electrode {negative electrode capacity (mAh)/positive electrode capacity (mAh)} to be in the above-described range, a predetermined margin in the capacity on the negative electrode side can be secured. Therefore, even in a case where the decomposition of the negative electrode active material due to the battery reaction proceeds rapidly, a certain or more negative electrode capacity can be secured. As a result, even in a case where the non-aqueous electrolyte secondary battery is stored and used for a long period of time in a severe temperature and humidity environment, a decrease in the discharge capacity can be suppressed.

By setting the molar ratio of the lithium (Li) to the SiO_{X} in the negative electrode active material to be in the above-described range, it is possible to make it less likely to cause charging abnormalities and the like. By setting the molar ratio of the lithium (Li) to the SiO_{X} in the negative electrode active material to be in the above-described range, even in a case where the non-aqueous electrolyte secondary battery 1 is used or stored for a long period of time in a high-temperature environment, a decrease in the discharge capacity can be suppressed.

By setting the molar ratio (Li/LMO) of the lithium (Li) to the lithium manganese oxide (LMO) to be in the above-described range, electrical characteristics after storing the non-aqueous electrolyte secondary battery under conditions of high temperature, high humidity, and overdischarge, that is, overdischarge characteristics are improved. As a result, even in a case where overdischarge occurs, it is possible to suppress the deterioration of the non-aqueous electrolyte secondary battery.

In the non-aqueous electrolyte secondary battery, in the above-described configuration, it is preferable that the positive electrode contains at least Li₁₊ₓCo_{y}Mn_{2-x-y}O₄ (0 ≤ x ≤ 0.33, 0 < y ≤ 0.2) as the lithium manganese oxide used in the positive electrode active material.

By using a positive electrode containing the compound having the above-described composition as the lithium manganese oxide used in the positive electrode active material, the discharge characteristics in a particularly low-temperature environment are improved, a sufficient discharge capacity can be obtained in a wide temperature range, and the battery characteristics are improved.

In the above-described configuration, it is preferable that at least a part of a surface of the SiO_{X} (0 ≤ X < 2) is coated with carbon.

In a case where the at least a part of the surface of the SiO_{X} (0 ≤ X < 2) is coated with carbon, the conductivity of the negative electrode 20 is improved, and an increase in internal resistance in a low-temperature environment is suppressed. As a result, a voltage drop at the initial stage of discharging is suppressed, and it is possible to further stabilize the discharge characteristics.

The electrolyte solution preferably contains a mixed solution containing propylene carbonate (PC), ethylene carbonate (EC), and dimethoxyethane (DME) as the organic solvent in a range of a volume ratio {PC:EC:DME} = {0.5 to 1.5:0.5 to 1.5:1 to 3}, and contains lithium bis(fluorosulfonyl)imide (LiFSI) as the supporting salt at a concentration of 0.6 to 1.5 (mol/L).

By using ethylene carbonate (EC) and propylene carbonate (PC) as the cyclic carbonate solvent, in particular, a capacity retention rate at a high temperature can be satisfactorily maintained. By using dimethoxyethane (DME) as the chain-like ether solvent, in particular, the low temperature characteristics can be improved while ensuring the capacity at normal temperature. Furthermore, by adjusting the mixing ratio of EC, PC, and DME, an effect of maintaining the discharge capacity in particular in a low-temperature environment is remarkably obtained.

By setting the solvent used in the electrolyte solution to have the above composition, and by adjusting and optimizing the composition and the content of the supporting salt, an effect of being able to maintain discharge capacity under a low-temperature environment is remarkably obtained.

It is preferable that the non-aqueous electrolyte secondary battery includes a separator disposed between the positive electrode and the negative electrode, and a housing container in which the positive electrode, the negative electrode, the separator, and the electrolyte solution are disposed in an internal accommodating space.

The non-aqueous electrolyte secondary battery has a structure excellent in electrical insulation properties and sealing properties because each battery element is disposed in the accommodating space of the housing container in which the positive electrode and the negative electrode are accommodated. Therefore, volatilization of the electrolyte solution and ingress of moisture contained in the atmosphere into inside of the battery can be suppressed.

It is preferable that the housing container is a coin-type container including a bottomed cylindrical positive electrode can, and a negative electrode can which is fixed to an opening portion of the positive electrode can with a gasket interposed therebetween and forms a accommodating space between the positive electrode can and the negative electrode can.

The non-aqueous electrolyte secondary battery has a structure excellent in electrical insulation properties and sealing properties because each battery element is disposed in the accommodating space of the housing container in which the positive electrode can and the negative electrode can are sealed in an optimal structure. Therefore, volatilization of the electrolyte solution and ingress of moisture contained in the atmosphere into inside of the battery can be suppressed. As a result, even in a coin-type non-aqueous electrolyte secondary battery having a small size, high output characteristics and high capacity characteristics can be obtained.

### Advantageous Effects of Invention

According to one aspect of the present invention, there is provided a non-aqueous electrolyte secondary battery which can obtain sufficient discharge capacity and has excellent overdischarge characteristics.

### BRIEF DESCRIPTION OF DRAWINGS

[FIG. 1] A cross-sectional view schematically showing a non-aqueous electrolyte secondary battery configured in a coin type (button type) according to an embodiment.
[FIG. 2] A graph showing test results of a measurement of a discharge capacity after storage under an overdischarge condition in the non-aqueous electrolyte secondary battery according to the present embodiment.
[FIG. 3] A graph showing test results of a measurement of a discharge capacity in a low-temperature environment in the non-aqueous electrolyte secondary battery according to the present embodiment.

### DESCRIPTION OF EMBODIMENTS

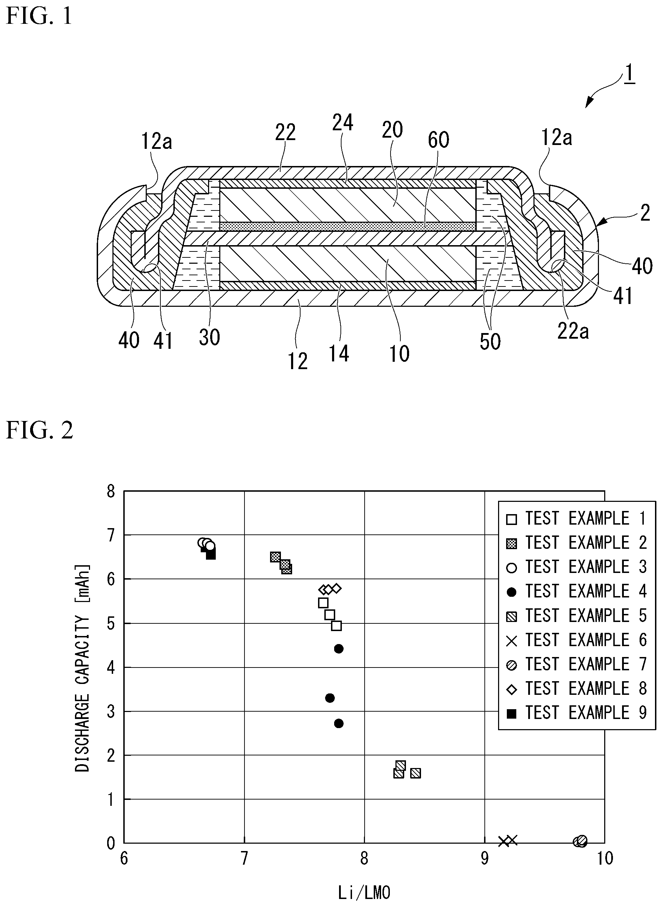

Hereinafter, an embodiment of a non-aqueous electrolyte secondary battery according to the present invention will be described in detail with reference to FIG. 1.

It is noted that the non-aqueous electrolyte secondary battery described below is specifically configured such that an active material used as a positive electrode or a negative electrode and an electrolyte solution are accommodated in a container, but the configuration according to the present invention is also applicable to an electrochemical cell such as a lithium ion capacitor.

### <Configuration of non-aqueous electrolyte secondary battery>

As shown in FIG. 1, a non-aqueous electrolyte secondary battery 1 according to the present embodiment is a so-called coin (button)-type battery. The non-aqueous electrolyte secondary battery 1 includes, in a housing container 2, a positive electrode 10 capable of occluding and releasing lithium ions, a negative electrode 20 capable of occluding and releasing lithium ions, a separator 30 disposed between the positive electrode 10 and the negative electrode 20, and an electrolyte solution 50 containing at least a supporting salt and an organic solvent.

More specifically, the non-aqueous electrolyte secondary battery 1 includes the housing container 2 having a positive electrode can 12 and a negative electrode can 22. The positive electrode can 12 has a bottomed cylindrical shape. The negative electrode can 22 has a cylindrical shape with a lid (hat shape). The negative electrode can 22 is fixed to an opening portion 12a of the positive electrode can 12 with a gasket 40 interposed therebetween. The negative electrode can 22 forms a accommodating space between the negative electrode can 22 and the positive electrode can 12. A peripheral edge of the opening portion 12a of the positive electrode can 12 is crimped inward, that is, to the negative electrode can 22 side. As a result, the accommodating space is sealed. The housing container 2 is a coin-type container.

In the accommodating space sealed by the housing container 2, the positive electrode 10 provided on the positive electrode can 12 side and the negative electrode 20 provided on the negative electrode can 22 side are disposed to face each other with the separator 30 interposed therebetween. The accommodating space is filled with the electrolyte solution 50. In the example shown in FIG. 1, a lithium foil 60 is interposed between the negative electrode 20 and the separator 30.

The gasket 40 is tightly inserted along an inner peripheral surface of the positive electrode can 12. The gasket 40 is connected to an outer periphery of the separator 30 and holds the separator 30.

The positive electrode 10, the negative electrode 20, and the separator 30 are impregnated with the electrolyte solution 50 filled in the housing container 2.

In the non-aqueous electrolyte secondary battery 1 of the example shown in FIG. 1, the positive electrode 10 is electrically connected to an inner surface of the positive electrode can 12 with the positive electrode collector 14 interposed therebetween. The negative electrode 20 is electrically connected to an inner surface of the negative electrode can 22 with the negative electrode collector 24 interposed therebetween. In the present embodiment, the non-aqueous electrolyte secondary battery 1 including the positive electrode collector 14 and the negative electrode collector 24 has been described as an example, but the present invention is not limited thereto. The non-aqueous electrolyte secondary battery 1 may have, for example, a configuration in which the positive electrode can 12 also serves as the positive electrode collector and the negative electrode can 22 also serves as the negative electrode collector.

The non-aqueous electrolyte secondary battery 1 of the present embodiment, by being configured as described above, can accumulate (charge) electric charges and release (discharge) electric charges by migration of lithium ions move from one of the positive electrode 10 and the negative electrode 20 to the other.

The positive electrode 10 contains a lithium manganese oxide (LMO) as a positive electrode active material.

The negative electrode 20 contains a lithium (Li) and SiO_{X} (0 ≤ X < 2) as a negative electrode active material.

### [Positive electrode can and negative electrode can]

The positive electrode can 12 is configured in a bottomed cylindrical shape and has a circular opening portion 12a in a plan view. As a material of the positive electrode can 12, any known material in the related art can be used without any limitation. Examples of the material of the positive electrode can 12 include stainless steel such as SUS329J4L and NAS64.

The negative electrode can 22 is configured in a cylindrical shape with a lid (hat shape), and a tip portion 22a thereof is configured to enter the positive electrode can 12 from the opening portion 12a. Examples of the material of the negative electrode can 22 include stainless steel known in the related art, as in the material of the positive electrode can 12, and for example, SUS304-BA or the like can be used. As the negative electrode can 22, for example, a cladding material in which copper, nickel, or the like is pressure-bonded to stainless steel can also be used.

The positive electrode can 12 and the negative electrode can 22 are fixed to each other by crimping the peripheral edge of the opening portion 12a of the positive electrode can 12 to the negative electrode can 22 side in a state where a gasket 40 is interposed therebetween. The positive electrode can 12 and the negative electrode can 22 seal an accommodating space. A plate thickness of a metal plate material used for the positive electrode can 12 or the negative electrode can 22 is generally about 0.1 to 0.3 mm. An average plate thickness of the entire positive electrode can 12 or negative electrode can 22 is about 0.20 mm.

In the example shown in FIG. 1, the negative electrode can 22 has a shape in which the tip portion 22a is folded along an outer side surface of the negative electrode can 22. The negative electrode can 22 may have a shape in which the tip portion does not have a fold.

Examples of the non-aqueous electrolyte secondary battery to which the configuration of the present embodiment can be applied include a battery having a 920 size (outer diameter φ9.5 mm × height 2.0 mm), which is a general size of a coin-type non-aqueous electrolyte secondary battery.

### [Gasket]

The gasket 40 is formed in an annular shape along an inner peripheral surface of the positive electrode can 12. An annular groove 41 is formed in the gasket 40. The tip portion 22a of the negative electrode can 22 is disposed inside the annular groove 41. A material of the gasket 40 is preferably a resin having a thermal deformation temperature of 230°C or higher. In a case where the thermal deformation temperature of the resin used for the gasket 40 is 230°C or higher, even in a case where the non-aqueous electrolyte secondary battery 1 is used or stored in a high-temperature environment or in a case where heat is generated during the use of the non-aqueous electrolyte secondary battery 1, deformation of the gasket can be suppressed, thereby suppressing leakage of the electrolyte solution 50.

Examples of the material of the gasket 40 include plastics such as polypropylene resin (PP), polyphenylene sulfide (PPS), polyethylene terephthalate (PET), polyamide, a liquid crystal polymer (LCP), a tetrafluoroethylene-perfluoroalkyl vinyl ether copolymer resin (PFA), a polyether ether ketone resin (PEEK), a polyether nitrile resin (PEN), a polyether ketone resin (PEK), a polyarylate resin, a polybutylene terephthalate resin (PBT), a polycyclohexane dimethylene terephthalate resin, a polyether sulfone resin (PES), a polyamino bismaleimide resin, a polyether imide resin, and a fluororesin. Among these, the polypropylene resin is preferable from the viewpoint that large deformation of the gasket can be suppressed during use or storage in a high-temperature environment and the sealing property of the non-aqueous electrolyte secondary battery is further improved.

As the gasket 40, a material obtained by adding glass fibers, mica whiskers, ceramic fine powder, or the like to the above-described material (polypropylene resin or the like) in an addition amount of 30% by mass or less can also be suitably used. By using such a material, it is possible to suppress large deformation of the gasket due to a high temperature and to suppress leakage of the electrolyte solution 50.

A sealing agent may be applied to an inner surface of the annular groove 41 of the gasket 40. As the sealing agent, asphalt, an epoxy resin, a polyamide-based resin, a butyl rubber-based adhesive, or the like can be used. The sealing agent is used after being applied to the inside of the annular groove 41 and then dried.

It is noted that the gasket 40 is interposed between the positive electrode can 12 and the negative electrode can 22 and at least a part thereof is in a compressed state, but the compression rate at this time is not particularly limited and may be set to a range in which the inside of the non-aqueous electrolyte secondary battery 1 can be reliably sealed and the gasket 40 is not broken.

### [Electrolyte solution]

The electrolyte solution 50 contains at least an organic solvent and a supporting salt. As the electrolyte solution 50, for example, a mixed solvent (mixed solution) containing propylene carbonate (PC), ethylene carbonate (EC), and dimethoxyethane (DME) as organic solvents in a range of a volume ratio {PC:EC:DME} = {0.5 to 1.5:0.5 to 1.5:1 to 3} is used. The electrolyte solution 50 contains lithium bis(fluorosulfonyl)imide (LiFSI) as a supporting salt, for example, in an amount of 0.6 to 1.5 (mol/L). The content of LiFSI may be 1.0 (mol/L) or more and 1.5 (mol/L) or less. The electrolyte solution 50 is usually obtained by dissolving a supporting salt in a non-aqueous solvent such as an organic solvent. The characteristics of the electrolyte solution 50 are determined in consideration of the required heat resistance, viscosity, and the like.

In a case where the organic solvent is a mixed solvent containing PC, EC, and DME at a mixing ratio in an appropriate range, it is possible to realize the non-aqueous electrolyte secondary battery 1 capable of maintaining a sufficient discharge capacity in a wide temperature range including a low-temperature environment. Specifically, by using PC and EC having a high permittivity and high solubility of the supporting salt as the cyclic carbonate solvent, the discharge capacity of the non-aqueous electrolyte secondary battery 1 is increased. Since PC and EC have a high boiling point, the electrolyte solution is difficult to volatilize even in a case where the electrolyte solution is used or stored in a high-temperature environment.

By using PC having a lower melting point than EC as the cyclic carbonate solvent in a mixed manner with EC, it is possible to improve the low temperature characteristics. By using DME having a low melting point as the chain-like ether solvent, the low temperature characteristics are improved. In addition, since DME has a low viscosity, the electrical conductivity of the electrolyte solution is improved. Furthermore, DME solvates Li ions, which increases the discharge capacity of the non-aqueous electrolyte secondary battery.

The cyclic carbonate solvent has a structure represented by the following (Chemical Formula 1). Examples of the cyclic carbonate solvent include propylene carbonate (PC), ethylene carbonate (EC), butylene carbonate (BC), trifluoropropylene carbonate (TFPC), chloroethylene carbonate (ClEC), trifluoroethylene carbonate (TFEC), difluoroethylene carbonate (DFEC), vinylene carbonate (VEC), and the like.

In the non-aqueous electrolyte secondary battery 1, from the viewpoint of improving the ease of forming a film on the electrode onto the negative electrode 20, improving the low temperature characteristics, and improving the capacity retention rate at a high temperature, two types (PC and EC) can be used as the cyclic carbonate solvent having a structure represented by the following (Chemical Formula 1).

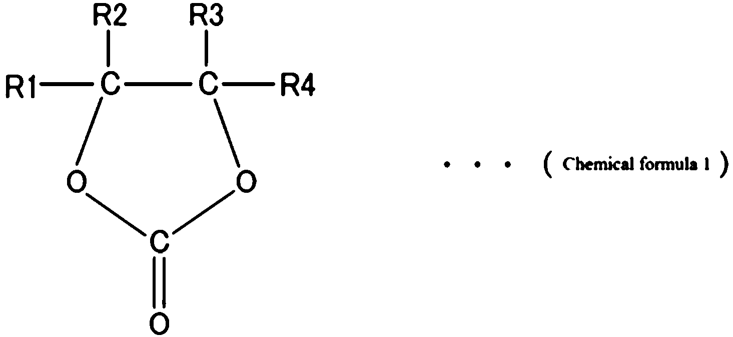

Provided that, in the above (Chemical Formula 1), R1, R2, R3, and R4 each represent any of hydrogen, fluorine, chlorine, an alkyl group having 1 to 3 carbon atoms, and a fluorinated alkyl group. In addition, R1, R2, R3, and R4 in the above (Chemical Formula 1) may be the same as or different from each other.

In the present embodiment, as described above, by using PC and EC having a high permittivity and high solubility of a supporting salt as the cyclic carbonate solvent, it is possible to obtain a large discharge capacity. Since PC and EC have a high boiling point, the electrolyte solution is difficult to volatilize even in a case of being used or stored in a high-temperature environment. Furthermore, by using PC having a lower melting point than EC as the cyclic carbonate solvent in a mixed manner with EC, excellent low temperature characteristics can be obtained.

The chain-like ether solvent has a structure represented by the following (Chemical Formula 2). Examples of the chain-like ether solvent include 1,2-dimethoxyethane (DME), 1,2-diethoxyethane (DEE), and the like.

In the present embodiment, particularly, from the viewpoint of improving the conductivity and further from the viewpoint of improving the low temperature characteristics while ensuring the capacity at normal temperature, DME that is easily solvated with lithium ions is used as the chain-like ether solvent having a structure represented by the following (Chemical Formula 2).

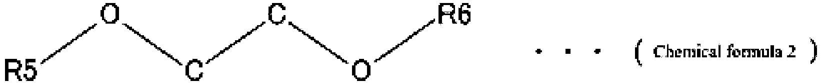

Provided that, in the above (Chemical Formula 2), R5 and R6 each represent any of hydrogen, fluorine, chlorine, an alkyl group having 1 to 3 carbon atoms, and a fluorinated alkyl group. In addition, R5 and R6 may be the same as or different from each other.

In the present embodiment, as described above, by using DME having a low melting point as the chain-like ether solvent, the low temperature characteristics are improved. In addition, since DME has a low viscosity, the electrical conductivity of the electrolyte solution is improved. Furthermore, since DME is solvated with Li ions, a large discharge capacity can be obtained as a non-aqueous electrolyte secondary battery.

In the present embodiment, the blending ratio of each organic solvent in the solvent of the electrolyte solution 50 is set to be in a range of a volume ratio {PC:EC:DME} = 0.5 to 1.5:0.5 to 1.5:1 to 3. The blending ratio in the solvent is more preferably in a range of 0.8 to 1.2:0.8 to 1.2:1.5 to 2.5 in terms of volume ratio, and it is most preferably approximately {PC:EC:DME} = {1:1:2}.

In a case where the blending ratio of the organic solvent is in the above range, the effect of improving the low temperature characteristics without impairing the capacity retention rate at a high temperature or at normal temperature as described above can be more remarkably obtained. More specifically, in a case where the blending ratio of propylene carbonate (PC) which is a cyclic carbonate solvent is equal to or more than the lower limit of the above range, the effect of improving the low temperature characteristics by using PC having a lower melting point than EC in a mixed manner with EC can be remarkably obtained. On the other hand, since the permittivity of PC is lower than that of EC, the concentration of the supporting salt cannot be increased. Therefore, in a case where the content of PC is too large, there is a possibility that a large discharge capacity is difficult to obtain. Thus, it is preferable to limit the blending ratio of PC to be equal to or less than the upper limit of the above range.

In the organic solvent, in a case where the blending ratio of ethylene carbonate (EC) which is a cyclic carbonate solvent is equal to or more than the lower limit of the above range, the permittivity of the electrolyte solution 50 and the solubility of the supporting salt are increased, and the discharge capacity of the non-aqueous electrolyte secondary battery is increased. Since EC has a high viscosity, the electrical conductivity is poor. Since EC has a high melting point, in a case where the content of EC is too large, the low temperature characteristics may deteriorate. Therefore, it is preferable to limit the blending ratio of EC to be equal to or less than the upper limit of the above range. By setting the blending ratio of EC in the organic solvent to be in the above range, it is possible to suppress an increase in internal resistance in a low-temperature environment.

In the organic solvent, in a case where the blending ratio of dimethoxyethane (DME) which is a chain-like ether solvent is equal to or more than the lower limit of the above range, the effect of improving the low temperature characteristics by containing a predetermined amount of DME having a low melting point in the organic solvent is remarkable. Since DME has a low viscosity, it is possible to improve the electrical conductivity, and to obtain a large discharge capacity by solvating Li ions. Since the permittivity of DME is low, the concentration of the supporting salt cannot be increased. Therefore, in a case where the content of PC is too large, there is a possibility that a large discharge capacity is difficult to obtain. Thus, it is preferable to limit the blending ratio of PC to be equal to or less than the upper limit of the above range. By setting the blending ratio of DME in the organic solvent to be in the above range, it is possible to suppress a voltage drop at the initial stage of discharge.

By using ethylene carbonate (EC) and propylene carbonate (PC) as the cyclic carbonate solvent, a capacity retention rate in particular at a high temperature can be satisfactorily maintained. By using dimethoxyethane (DME) as the chain-like ether solvent, in particular, the low temperature characteristics can be improved while ensuring the capacity at normal temperature. Furthermore, by adjusting the mixing ratio of EC, PC, and DME, an effect of maintaining the discharge capacity in particular in a low temperature environment is remarkably obtained.

As the supporting salt used in the electrolyte solution 50, a Li compound can be used. Examples of the Li compound include lithium bis(fluorosulfonyl)imide (LiFSI), lithium bis(trifluoromethanesulfonyl)imide (LiTFSI), and the like, and LiFSI is preferable.

The content of the supporting salt in the electrolyte solution 50 can be determined in consideration of the type of the supporting salt and the like, and in consideration of the type of the positive electrode active material described later. In the present embodiment, the content of the supporting salt in the electrolyte solution 50 can be, for example, 0.6 to 1.5 (mol/L). By containing the above lithium compound as the supporting salt in the electrolyte solution 50 at a molar ratio in the above range, a sufficient discharge capacity is remarkably obtained in a wide temperature range including a low-temperature environment, and the battery characteristics are improved.

In a case where the concentration of the supporting salt in the electrolyte solution 50 exceeds the upper limit of the above range, the discharge capacity may be reduced. In a case where the concentration of the supporting salt in the electrolyte solution 50 is lower than the above lower limit, the internal resistance may increase.

In a case where LiFSI is used alone as the supporting salt and LiFSI is contained in the electrolyte solution 50 at 0.6 to 1.5 (mol/L), a voltage drop at the initial stage of discharge can be suppressed. Furthermore, the discharge characteristics in a low-temperature environment can also be improved, and a sufficient discharge capacity can be obtained in a wide temperature range. Since LiFSI has excellent conductivity, each of the above-described effects is more remarkable.

In the present embodiment, by setting the organic solvent used in the electrolyte solution 50 to the above-described composition, particularly, an increase in viscosity of the electrolyte solution in a low-temperature environment of -30°C to -40°C can be suppressed, and the hindrance of the movement of the charge can be suppressed. As a result, the discharge characteristics in a low-temperature environment are improved, and it is possible to maintain a sufficient discharge capacity in a wide temperature range. In the present embodiment, by adopting a configuration in which the above lithium compound is included as the supporting salt contained in the electrolyte solution 50 at a molar ratio in the above range, the above-described effects are more remarkably obtained. Therefore, the battery characteristics are further improved.

In the present embodiment, in addition to the optimization of the composition of the above-described electrolyte solution 50, the negative electrode active material of the negative electrode 20 contains lithium (Li) and SiO_{X} (0 ≤ X < 2). As a result, the effect of improving the discharge characteristics in a low-temperature environment and maintaining a sufficient discharge capacity in a wide temperature range is more remarkable.

### [Positive electrode]

The positive electrode 10 contains a positive electrode active material containing a lithium manganese oxide (LMO). As the positive electrode 10, for example, a mixture of a positive electrode active material, polyacrylic acid as a binder, and graphite or the like as a conductive auxiliary agent can be used.

Examples of the positive electrode active material contained in the positive electrode 10 include lithium manganese oxides such as LiMn₂O₄ and Li₄Mn₅O₁₂, which have a spinel-type crystal structure. Among the lithium manganese oxides, particularly, those in which a part of Mn is substituted with Co, such as Li₁₊ₓCo_{y}Mn_{2-x-y}O₄ (0 ≤ x ≤ 0.33, 0 < y ≤ 0.2), are preferable. As described above, by using a positive electrode active material in which a transition metal element such as Co or Ni is added to a lithium manganese oxide and a part of the lithium manganese oxide is substituted with the transition metal element, the discharge characteristics are further improved.

In the present embodiment, by using a positive electrode active material consisting of a lithium manganese oxide having the above-described composition in the positive electrode 10, the discharge characteristics in a low-temperature environment are particularly improved, the effect of obtaining a sufficient discharge capacity in a wide temperature range is more remarkable, and the battery characteristics are further improved. In the present embodiment, as the positive electrode active material, not only one of the above-described lithium manganese oxides but also a plurality of the above-described lithium manganese oxides may be contained.

In a case where a granular positive electrode active material consisting of the above-described material is used, a particle diameter (D50) thereof is not particularly limited, and for example, it is preferably 0.1 to 100 µm and more preferably 1 to 10 µm. In a case where the particle diameter (D50) of the positive electrode active material is less than the lower limit value of the above-described preferred range, the reactivity is increased in a case where the non-aqueous electrolyte secondary battery is exposed to a high temperature. Therefore, the handling is difficult. In a case where the particle diameter (D50) of the positive electrode active material exceeds the upper limit value of the above-described preferred range, there is a possibility that the discharge rate may decrease. The "particle diameter (D50) of the positive electrode active material" is a particle diameter measured by a well-known laser diffraction method in the related art, and means a median diameter.

A content of the positive electrode active material in the positive electrode 10 is determined in consideration of the discharge capacity or the like required for the non-aqueous electrolyte secondary battery 1. The content of the positive electrode active material in the positive electrode 10 is preferably 50% to 95% by mass. In a case where the content of the positive electrode active material is equal to or more than the lower limit value of the above-described preferred range, a sufficient discharge capacity is likely to be obtained. In a case where the content of the positive electrode active material is equal to or less than the upper limit value of the above-described preferred range, the positive electrode 10 is easily molded.

The positive electrode 10 may contain a conductive auxiliary agent (hereinafter, a conductive auxiliary agent used in the positive electrode 10 may be referred to as a "positive electrode conductive auxiliary agent"). Examples of the positive electrode conductive auxiliary agent include carbonaceous materials such as furnace black, Ketjenblack, acetylene black, and graphite. The positive electrode conductive auxiliary agent may be used alone or in combination of two or more types thereof.

A content of the positive electrode conductive auxiliary agent in the positive electrode 10 is preferably 4% to 40% by mass and more preferably 10% to 25% by mass. In a case where the content of the positive electrode conductive auxiliary agent is equal to or more than the lower limit value of the above-described preferred range, sufficient conductivity is likely to be obtained. In a case where the content of the positive electrode conductive auxiliary agent is equal to or more than the lower limit value of the above-described preferred range, the electrode is easily molded in a case of being molded into a pellet shape. On the other hand, in a case where the content of the positive electrode conductive auxiliary agent in the positive electrode 10 is equal to or less than the upper limit value of the above-described preferred range, a sufficient discharge capacity of the positive electrode 10 is likely to be obtained.

The positive electrode 10 may contain a binder (hereinafter, the binder used in the positive electrode 10 may be referred to as a "positive electrode binder"). As the positive electrode binder, a substance known in the related art can be used, and examples thereof include polytetrafluoroethylene (PTFE), polyvinylidene fluoride (PVDF), styrene-butadiene rubber (SBR), polyacrylic acid (PA), carboxymethyl cellulose (CMC), and polyvinyl alcohol (PVA). Among these, polyacrylic acid is preferable. In particular, a crosslinked polyacrylic acid is more preferable. The positive electrode binder may be used alone or in combination of two or more types thereof.

In a case where the polyacrylic acid is used as the positive electrode binder, it is preferable that the polyacrylic acid is adjusted to a pH of 3 to 10 in advance. In this case, for adjusting the pH, for example, an alkali metal hydroxide such as lithium hydroxide or an alkaline earth metal hydroxide such as magnesium hydroxide can be used. The content of the positive electrode binder in the positive electrode 10 can be, for example, 1% to 20% by mass.

The size of the positive electrode 10 is determined according to the size of the non-aqueous electrolyte secondary battery 1. The thickness of the positive electrode 10 is determined according to the size of the non-aqueous electrolyte secondary battery 1. In a case where the non-aqueous electrolyte secondary battery 1 is a coin type for backup for various electronic apparatus, the thickness of the positive electrode 10 is, for example, about 300 to 1,000 µm.

As a method for manufacturing the positive electrode 10, the following method can be adopted. A positive electrode mixture is obtained using a positive electrode active material. As necessary, at least any of a positive electrode conductive auxiliary agent or a positive electrode binder is added to the positive electrode mixture. The positive electrode mixture is pressure-molded into any shape. The pressure during the pressure-molding is determined in consideration of the type of the positive electrode conductive auxiliary agent and the like, and can be, for example, 0.2 to 5 ton/cm².

As the positive electrode collector 14, a known one in the related art can be used. The positive electrode collector 14 is composed of, for example, a conductive resin adhesive using carbon as a conductive filler, and the like.

### [Negative electrode]

The negative electrode 20 contains lithium (Li) and a silicon oxide represented by SiO_{X} (0 ≤ X < 2) as a negative electrode active material. As the negative electrode 20, for example, a mixture obtained by mixing an appropriate binder, polyacrylic acid as a binding agent, and graphite or the like as a conductive auxiliary agent in addition to the negative electrode active material can be used.

A molar ratio (Li/SiO_{X}) of the lithium (Li) to the SiO_{X} (0 ≤ X < 2) in the negative electrode active material is in a range of 3.8 to 4.9. A molar ratio (Li/SiO_{X}) of the lithium (Li) to the SiO_{X} (0 ≤ X < 2) in the negative electrode active material is in a range of 4.0 to 4.6. The molar ratio (Li/SiO_{X}) may be 3.9 or more. The molar ratio (Li/SiO_{X}) may be, for example, 3.9 to 4.9. The molar ratio (Li/SiO_{X}) may be 4.1 or more. The molar ratio (Li/SiO_{X}) may be, for example, 4.1 to 4.6.

By setting the molar ratio of the lithium (Li) to the SiO_{X} in the negative electrode active material to be in the above-described range, it is possible to make it less likely to cause charging abnormalities and the like. By setting the molar ratio of the lithium (Li) to the SiO_{X} in the negative electrode active material to be in the above-described range, even in a case where the non-aqueous electrolyte secondary battery 1 is used or stored for a long period of time in a high-temperature environment, a decrease in the discharge capacity can be suppressed.

In a case where the molar ratio (Li/SiO_{X}) is less than 3.8, Li is insufficient in a case where the non-aqueous electrolyte secondary battery 1 is used or stored for a long period of time in a high-temperature environment, and the discharge capacity decreases. On the other hand, in a case where the molar ratio (Li/SiO_{X}) exceeds 4.9, Li is too much. Therefore, charging abnormalities are likely to occur. In a case where the molar ratio (Li/SiO_{X}) exceeds 4.9, metallic Li remains without being incorporated into SiO_{X}. Therefore, there is a possibility that the internal resistance increases and the discharge capacity decreases.

SiOₓ (0 ≤ X < 2) is, for example, SiO. By using SiOₓ (0 ≤ X < 2) in the negative electrode active material, it is possible to use the non-aqueous electrolyte secondary battery 1 at a high voltage, and the cycle characteristics are improved. The negative electrode 20 may contain, as the negative electrode active material, in addition to lithium (Li) and SiOₓ (0 ≤ X < 2), at least any of carbon, Si, WO₂, or WO₃. By using the above-described material as the negative electrode active material in the negative electrode 20, the reaction between the electrolyte solution 50 and the negative electrode 20 in the charge and discharge cycle is suppressed, the decrease in capacity can be suppressed, and the cycle characteristics are improved.

At least a part of the surface of SiOₓ (0 ≤ X < 2) may be coated with carbon (C). As a result, the conductivity of the negative electrode 20 is improved, and the increase in internal resistance in a low-temperature environment is suppressed. Therefore, the voltage drop at the initial stage of discharge is suppressed, and the discharge characteristics can be further stabilized. SiOₓ (0 ≤ X < 2) may be in a particle shape. At least a part of the surface of SiOₓ (0 ≤ X < 2) may be coated with carbon, but in a case where the entire surface is coated, the above-described effect can be enhanced.

A method of coating the particle surface of SiOₓ (0 ≤ X < 2) with carbon is not particularly limited, and examples thereof include a physical vapor deposition method (PVD) using a gas containing an organic substance such as methane or acetylene, a chemical vapor deposition method (CVD), and the like.

In a case where SiOₓ (0 ≤ X < 2) is used as the negative electrode active material, a particle diameter (D50) thereof is not particularly limited, and is, for example, preferably 0.1 to 30 µm and more preferably 1 to 10 µm. In a case where the particle diameter (D50) of the negative electrode active material is within the above-described range, the conductivity is maintained even in a case where the negative electrode expands or contracts during charging and discharging of the non-aqueous electrolyte secondary battery. Therefore, the deterioration of the charge and discharge characteristics such as the cycle characteristics is suppressed. In a case where the particle diameter (D50) of the negative electrode active material is less than the lower limit value of the above-described preferred range, for example, the reactivity is increased in a case where the non-aqueous electrolyte secondary battery is exposed to a high temperature. Therefore, the handling is difficult. In a case where the particle diameter (D50) of the negative electrode active material exceeds the upper limit value of the above-described preferred range, there is a possibility that the discharge rate may decrease. The particle diameter (D50) of the negative electrode active material (SiOₓ (0 ≤ X < 2)) is a particle diameter in a state where at least a part of the surface of SiOₓ (0 ≤ X < 2) is coated with carbon.

A content of the negative electrode active material in the negative electrode 10 is determined in consideration of the discharge capacity or the like required for the non-aqueous electrolyte secondary battery 1. The content of the negative electrode active material in the negative electrode 20 is, for example, preferably 50% by mass or more and more preferably 60% to 80% by mass. In the negative electrode 20, in a case where the content of the negative electrode active material formed of the above-described material is equal to or more than the lower limit value of the above-described preferred range, a sufficient discharge capacity is likely to be obtained. In a case where the content of the negative electrode active material is equal to or less than the upper limit value of the above-described preferred range, the negative electrode 20 is easily molded.

The negative electrode 20 may contain a conductive auxiliary agent (hereinafter, a conductive auxiliary agent used in the negative electrode 20 may be referred to as a "negative electrode conductive auxiliary agent"). The negative electrode conductive auxiliary agent is the same as the positive electrode conductive auxiliary agent. The negative electrode 20 may contain a binder (hereinafter, the binder used in the negative electrode 20 may be referred to as a "negative electrode binder"). Examples of the negative electrode binder include polyvinylidene fluoride (PVDF), styrene-butadiene rubber (SBR), polyacrylic acid (PA), carboxymethyl cellulose (CMC), polyimide (PI), and polyamide-imide (PAI). Among these, polyacrylic acid is preferable, and crosslinked polyacrylic acid is more preferable.

The negative electrode binder may be used alone or in combination of two or more types thereof. It is noted that in a case where the polyacrylic acid is used as the negative electrode binder, it is preferable that the polyacrylic acid is adjusted to a pH of 3 to 10 in advance. In this case, the pH can be adjusted, for example, by adding an alkali metal hydroxide such as lithium hydroxide or an alkaline earth metal hydroxide such as magnesium hydroxide. The content of the negative electrode binder in the negative electrode 20 is, for example, 1% to 20% by mass.

The size and thickness of the negative electrode 20 are the same as the size and thickness of the positive electrode 10.

In the non-aqueous electrolyte secondary battery 1 shown in FIG. 1, a lithium foil 60 is provided on the surface of the negative electrode 20, that is, between the negative electrode 20 and a separator 30 described later.

As a method for manufacturing the negative electrode 20, the following method can be adopted. First, a negative electrode mixture is obtained using SiOₓ in the negative electrode active material. As necessary, at least any of a negative electrode conductive auxiliary agent such as graphite or the negative electrode binder is added to the negative electrode mixture. The negative electrode mixture is pressure-molded into any shape. The pressure during the pressure-molding is determined in consideration of the type of the negative electrode conductive auxiliary agent and the like, and can be, for example, 0.2 to 5 ton/cm². Then, the lithium foil is disposed on the surface of the pressure-molded negative electrode mixture, and enclosed in a housing container together with the positive electrode, the separator, and the electrolyte solution to produce a battery, and then the battery is allowed to stand at room temperature or under heating, whereby the negative electrode 20 in which lithium is incorporated into the negative electrode mixture can be obtained.

The same material as the positive electrode collector 14 can be used for the negative electrode collector 24.

### [Separator]

The separator 30 is interposed between the positive electrode 10 and the negative electrode 20. As the separator 30, an insulating film having a large ion permeability, excellent heat resistance, and a predetermined mechanical strength is used.

As the separator 30, a separator used in a non-aqueous electrolyte secondary battery in the related art, which is formed of a material satisfying the above-described characteristics, can be applied without any limitation. Examples of the separator 30 include a non-woven fabric, a fiber, or the like formed of a resin such as glass such as alkali glass, borosilicate glass, quartz glass, and lead glass, resin such as polyphenylene sulfide (PPS), polyether ether ketone (PEEK), polyethylene terephthalate (PET), polyamide-imide (PAI), polyamide, polyimide (PI), aramid, cellulose, fluororesin, and ceramics. Among the above, as the separator 30, a non-woven fabric formed of glass fibers is more preferably used. Since the glass fibers have excellent mechanical strength and a large ion permeability, it is possible to reduce the internal resistance and improve the discharge capacity.

The thickness of the separator 30 is determined in consideration of the size of the non-aqueous electrolyte secondary battery 1, the material of the separator 30, and the like. The thickness of the separator 30 can be, for example, about 5 to 300 µm.

### [Capacity balance between negative electrode and positive electrode]

A capacity balance represented by a capacity of the negative electrode 20 and a capacity of the positive electrode 10 {negative electrode capacity (mAh)/positive electrode capacity (mAh)} is in a range of 1.56 to 2.51. The above-described capacity balance is preferably 1.7 or more. The above-described capacity balance is preferably 1.8 or more. The above-described capacity balance is more preferably 2.0 or more. The above-described capacity balance is preferably 2.4 or more. The above-described capacity balance may be 2.3 or less.

By setting the capacity balance between the negative electrode 20 and the positive electrode 10 to be in the above-described range, a predetermined margin can be secured in the capacity on the negative electrode side. For example, even in a case where the decomposition of the negative electrode active material due to the battery reaction proceeds rapidly, it is possible to secure a negative electrode capacity of a certain level or more. Therefore, even in a case where the non-aqueous electrolyte secondary battery 1 is stored and used for a long period of time under a severe high-temperature and high-humidity environment, the decrease in discharge capacity is suppressed, and the effect of improving the storage characteristics is obtained.

In a case where the capacity balance between the negative electrode 20 and the positive electrode 10 is less than 1.56, the deterioration in a case of long-term use under a high-temperature environment is large, and it is difficult to maintain the capacity. On the other hand, in a case where the capacity balance between the negative electrode 20 and the positive electrode 10 exceeds 2.51, a sufficient discharge capacity cannot be obtained.

### [Molar ratio of lithium to lithium manganese oxide]

A molar ratio (Li/LMO) of lithium (Li) used in the negative electrode 20 to lithium manganese oxide (LMO) used in the positive electrode 10 is 8.0 or less. Li/LMO may be 7.8 or less.

By setting the molar ratio (Li/LMO) of the lithium (Li) to the lithium manganese oxide (LMO) to be in the above-described range, electrical characteristics after storing the non-aqueous electrolyte secondary battery under conditions of high temperature, high humidity, and overdischarge, that is, overdischarge characteristics are improved. As a result, even in a case where overdischarge occurs, it is possible to suppress the deterioration of the non-aqueous electrolyte secondary battery.

The molar ratio (Li/LMO) of lithium (Li) to lithium manganese oxide (LMO) may be, for example, 6.7 or more. In a case where Li/LMO is within this range, the capacity balance can be within the above-described range (1.56 to 2.51), and Li/SiO_{X} can be within the above-described range (3.8 to 4.9). By setting the capacity balance to be within the above-described range, it is possible to suppress the decrease in discharge capacity even in a case where the non-aqueous electrolyte secondary battery is used under a severe temperature and humidity environment. By setting Li/SiO_{X} to be within the above-described range, it is difficult for charging abnormalities and the like to occur, and even in a case where the non-aqueous electrolyte secondary battery is used or stored for a long period of time under a high-temperature environment, it is possible to suppress the decrease in discharge capacity.

### <Effects of non-aqueous electrolyte secondary battery according to embodiment>

In the non-aqueous electrolyte secondary battery 1 according to the present embodiment, the capacity balance represented by the capacity of the negative electrode and the capacity of the positive electrode is optimized as described above, and the molar ratio (Li/SiO_{X}) of lithium to SiO_{X} (0 ≤ X < 2) in the negative electrode active material is set to be in the above-described range. Furthermore, the molar ratio (Li/LMO) of lithium to lithium manganese oxide is set to be in the above-described range. As a result, a sufficient discharge capacity can be obtained, and the overdischarge characteristics can be improved.

The non-aqueous electrolyte secondary battery 1 includes a separator 30 disposed between the positive electrode 10 and the negative electrode 20, and a housing container 2 in which the positive electrode 10, the negative electrode 20, the separator 30, and the electrolyte solution 50 are disposed in an internal accommodating space.

The non-aqueous electrolyte secondary battery 1 has a structure excellent in electrical insulation properties and sealing properties because each battery element is disposed in the accommodating space of the housing container 2 in which the positive electrode 10 and the negative electrode 20 are accommodated. Therefore, volatilization of the electrolyte solution and ingress of moisture contained in the atmosphere into inside of the battery can be suppressed.

The housing container 2 is a coin-type container including a bottomed cylindrical positive electrode can 12 and a negative electrode can 22 that is fixed to an opening portion 12a of the positive electrode can 12 with a gasket 40 interposed therebetween and forms a accommodating space between the positive electrode can 12 and the negative electrode can 22.

The non-aqueous electrolyte secondary battery 1 has a structure excellent in electrical insulation properties and sealing properties because each battery element is disposed in the accommodating space of the housing container 2 in which the positive electrode can 12 and the negative electrode can 22 are sealed in an optimal structure. Therefore, volatilization of the electrolyte solution and ingress of moisture contained in the atmosphere into inside of the battery can be suppressed. As a result, even in a coin-type non-aqueous electrolyte secondary battery having a small size, high output characteristics and high capacity characteristics can be obtained.

### <Other forms of non-aqueous electrolyte secondary battery>

In the present embodiment, as one embodiment of the non-aqueous electrolyte secondary battery, a non-aqueous electrolyte secondary battery having a coin-type structure, including a housing container formed by crimping a positive electrode can and a negative electrode can has been described, but the present invention is not limited thereto. The non-aqueous electrolyte secondary battery may be, for example, a non-aqueous electrolyte secondary battery having a structure in which an opening portion of a container body made of ceramics is sealed with a lid made of ceramics by a heating treatment such as seam welding using a metal sealing member.

The configuration according to the present embodiment can also be applied to, for example, an electrochemical cell such as a lithium ion capacitor.

### <Applications of non-aqueous electrolyte secondary battery>

The non-aqueous electrolyte secondary battery 1 according to the present embodiment can obtain a sufficient discharge capacity and can improve the overdischarge characteristics as described above. Therefore, for example, the non-aqueous electrolyte secondary battery can be suitably used as a power supply for backup having a voltage value of 2 to 3 V.

The silicon oxide contained in the negative electrode active material may be SiO_{X} (0 < X ≤ 2).

### Examples

Next, examples will be shown to describe the present invention in more detail. It is noted that the present invention is not limited to the scope of the present examples. The non-aqueous electrolyte secondary battery according to the present invention can be appropriately modified and implemented without changing the gist of the present invention.

### <Preparation of electrolyte solution and production of non-aqueous electrolyte secondary battery>

A coin-type non-aqueous electrolyte secondary battery shown in FIG. 1 was produced. An electrolyte solution having the composition shown in Table 1 was prepared. As the positive electrode active material, Li_{1.14}Co_{0.06}Mn_{1.80}O₄ was used. The negative electrode active material contains lithium (Li) and SiO coated with carbon on the entire surface. This non-aqueous electrolyte secondary battery is a coin-type (920 size) non-aqueous electrolyte secondary battery (lithium secondary battery) having an outer diameter of 9.5 mm and a thickness of 2.0 mm.

### (Preparation of electrolyte solution)

An organic solvent was prepared according to the blending ratio (% by volume) shown in Table 1, and a supporting salt was dissolved in the organic solvent to prepare an electrolyte solution 50. In this case, as the organic solvent, propylene carbonate (PC), ethylene carbonate (EC), and dimethoxyethane (DME) were mixed at a volume ratio {PC:EC:DME} = {1:1:2} to prepare a mixed solvent. As a supporting salt, lithium bis(fluorosulfonyl)imide (LiFSI) was dissolved in the obtained mixed solvent at a concentration shown in Table 1 to obtain an electrolyte solution 50.

### (Production of battery)

A positive electrode 10 was produced as follows. A commercially available lithium manganese oxide (Li_{1.14}Co_{0.06}Mn_{1.80}O₄) was used as the positive electrode active material. Graphite as a conductive auxiliary agent and polyacrylic acid as a binder were mixed with the positive electrode active material to prepare a positive electrode mixture. The ratio of the lithium manganese oxide:graphite:polyacrylic acid was 95:4:1 (mass ratio). 52 to 56 mg of the obtained positive electrode mixture was pressurized at a pressurizing force of 14 to 15 MPa and pressure-molded into a disk-shaped pellet having a diameter of 5.8 mm.

Next, the obtained pellet (positive electrode 10) was adhered to an inner surface of a positive electrode can 12 made of stainless steel (NAS64: t = 0.20 mm) using a conductive resin adhesive containing carbon, and the positive electrode 10 and the positive electrode can 12 were integrated to obtain a positive electrode unit. The positive electrode unit was heated and dried in the air under the conditions of 120°C and 11 hours. A sealing agent was applied to an inner surface of an opening portion 12a of the positive electrode can 12 in the positive electrode unit.

A negative electrode 20 was produced as follows. A negative electrode active material containing SiO powder in which carbon (C) was formed on the entire surface was prepared. Here, the ratio of SiO to C in the SiO powder was adjusted in advance to be 94:6 to 96:4 in terms of weight ratio. Graphite as a conductive agent, polyacrylic acid as a binder, and an ethylene-tetrafluoroethylene copolymer (ETFE) as a release agent were mixed with the negative electrode active material to prepare a negative electrode mixture. The ratio of the negative electrode active material:graphite:polyacrylic acid:ETFE was 75:20:4:1 (mass ratio). 10.0 to 14.1 mg of the obtained negative electrode mixture was pressure-molded at a pressurizing force of 20 MPa and pressure-molded into a disk-shaped pellet having a diameter of 6.3 mm.

Next, the obtained pellet (negative electrode 20) was adhered to an inner surface of a negative electrode can 22 made of a cladding material (t = 0.20 mm) consisting of a copper layer, a stainless steel layer, and a nickel layer using a conductive resin adhesive in which carbon was used as a conductive filler, and the negative electrode 20 and the negative electrode can 22 were integrated to obtain a negative electrode unit. The negative electrode unit was heated and dried under reduced pressure in the air under the conditions of 160°C and 11 hours.

A lithium foil 60 punched out to have a diameter of 5.4 to 6.0 mm and a thickness of 0.38 to 0.46 mm was pressure-bonded to the pellet-shaped negative electrode 20 to form a lithium-negative electrode laminated electrode.

In the present example, the positive electrode collector 14 and the negative electrode collector 24 shown in FIG. 1 were not provided, the positive electrode can 12 was provided with a function of a positive electrode collector, and the negative electrode can 22 was provided with a function of a negative electrode collector to produce a non-aqueous electrolyte secondary battery.

Next, a non-woven fabric consisting of glass fibers was dried and then punched out into a disk shape having a diameter of 7.4 mm to prepare a separator 30. The separator 30 was placed on the lithium foil 60 pressure-bonded onto the negative electrode 20, and a gasket 40 made of polypropylene was disposed in an opening portion of the negative electrode can 22.

Next, the positive electrode can 12 and the negative electrode can 22 were filled with the electrolyte solution 50 adjusted by the above-described procedure in a total amount of 25.6 µL per battery.

Next, the negative electrode unit was crimped to the positive electrode unit such that the separator 30 was in contact with the positive electrode 10. Then, the positive electrode can 12 and the negative electrode can 22 were sealed by fitting the opening portion of the positive electrode can 12, and the sealed battery was allowed to stand at room temperature for 4 days and further allowed to stand at 60°C for 2 days to obtain a non-aqueous electrolyte secondary battery.

**[Table 1]**

| Electrode | | Electrolyte solution | | | |
|---|---|---|---|---|---|
| Positive electrode active material | Negative electrode active material | Organic solvent | Ratio | Supporting salt | Concentration (mol/L) |
| Li_{1.14}Co_{0.06}Mn_{1.80}O₄ | Li+SiO (coated with carbon) | PC+EC+DME | 1:1:2 | LiFSI | 1 |

### [Test Examples 1 to 9]

In the production of each of the electrodes, a capacity balance represented by a capacity of the negative electrode 20 and a capacity of the positive electrode 10 {negative electrode capacity (mAh)/positive electrode capacity (mAh)} was adjusted to a value shown in Table 2. Table 2 shows a molar ratio (Li/SiO) of lithium (Li) to SiO in the negative electrode active material. Table 2 also shows a molar ratio (Li/LMO) of lithium (Li) to lithium manganese oxide (LMO).

### <Evaluation method>

The non-aqueous electrolyte secondary batteries of Test Examples 1 to 9 obtained by the above-described procedure were subjected to the evaluation tests described below.

The non-aqueous electrolyte secondary battery was short-circuited through a resistor of 10 kΩ to be in an overdischarged state, and the battery was placed in an environment at a temperature of 60°C for 20 days in this state, and then the discharge capacity was measured. The number of samples in each of the test examples was set to 3, and the Li/LMO and the discharge capacity described later in each sample are shown in Table 2. The measurement results are shown in Table 2 and FIG. 2.

The charging and discharging conditions in the measurement of the discharge capacity are as follows. The resistor for overdischarge was removed, the battery was left to stand at room temperature for 1 hour, and then the battery was charged under the following charging conditions. Next, the discharge capacity was measured under the following discharge conditions.

Charging conditions: constant current constant voltage (CCCV) charging, charging current of 200 µA, charging voltage of 3.1 V, charging time of 72 h, room temperature.

Discharge conditions: constant current (CC) discharge, discharge current of 25 µA, termination voltage of 2.0 V.

**[Table 2]**

| | Capacity balance (negative electrode capacity/positive electrode capacity) | Li/SiO | Li/LMO | Discharge capacity [mAh] |
|---|---|---|---|---|
| Test example 1 | 2.02 | 4.55 | 7.71 | 5.19 |
| | | | 7.66 | 5.46 |
| | | | 7.77 | 4.94 |
| Test example 2 | 2.02 | 4.25 | 7.26 | 6.50 |
| | | | 7.35 | 6.22 |
| | | | 7.34 | 6.32 |
| Test example 3 | 2.02 | 3.84 | 6.69 | 6.81 |
| | | | 6.65 | 6.82 |
| | | | 6.72 | 6.75 |
| Test example 4 | 2.18 | 4.25 | 7.79 | 2.72 |
| | | | 7.79 | 4.42 |
| | | | 7.71 | 3.30 |
| Test example 5 | 2.22 | 4.42 | 8.29 | 1.59 |
| | | | 8.43 | 1.59 |
| | | | 8.30 | 1.76 |
| Test example 6 | 2.41 | 4.45 | 9.16 | 0.03 |
| | | | 9.23 | 0.07 |
| | | | 9.16 | 0.04 |
| Test example 7 | 2.62 | 4.35 | 9.78 | 0.03 |
| | | | 9.81 | 0.02 |
| | | | 9.81 | 0.07 |
| Test example 8 | 2.22 | 4.16 | 7.70 | 5.76 |
| | | | 7.66 | 5.75 |
| | | | 7.77 | 5.78 |
| Test example 9 | 1.76 | 4.54 | 6.68 | 6.72 |
| | | | 6.72 | 6.55 |
| | | | 6.72 | 6.61 |

### [Evaluation results]

As shown in Table 2 and FIG. 2, in the test examples in which the molar ratio (Li/LMO) of lithium (Li) to lithium manganese oxide (LMO) was 8.0 or less, the electrical characteristics (overdischarge characteristics) after storing the non-aqueous electrolyte secondary battery under the conditions of a high temperature and overdischarge were improved. As a result, it can be seen that the deterioration of the non-aqueous electrolyte secondary battery can be suppressed even in a case where overdischarge occurs.

### [Test Examples 10 to 14]

Next, non-aqueous electrolyte secondary batteries of Test Examples 10, 11, 12, 13, and 14 were produced. In Test Examples 10 to 14, the same capacity balance and Li/SiO as in Test Example 1, and Li/LMO (7.95) equivalent to that of Test Example 1 were adopted, except for the concentration of LiFSI as a supporting salt of the electrolyte solution. That is, the capacity balance of Test Examples 10 to 14 was the same as the capacity balance of Test Example 1. The Li/SiO of Test Examples 10 to 14 was the same as the Li/SiO of Test Example 1. The Li/LMO of Test Examples 10 to 14 was equivalent to the Li/LMO of Test Example 1. The concentrations of LiFSI in Test Examples 10 to 14 were 1.0 mol/L (1.0 M), 1.2 mol/L (1.2 M), 1.5 mol/L (1.5 M), 1.8 mol/L (1.8 M), and 2.0 mol/L (2.0 M).

For the non-aqueous electrolyte secondary batteries of Test Examples 10 to 14, the discharge capacity at a low temperature was measured as described below.

First, as a pre-treatment, the non-aqueous electrolyte secondary battery was sequentially discharged and charged under the following conditions at room temperature.

Discharge conditions: constant current (CC) discharge, discharge current of 25 µA, termination voltage of 2.0 V.

Charging conditions: constant current constant voltage (CCCV) charging, charging current of 200 µA, charging voltage of 3.1 V, charging time of 72 h.

Next, the non-aqueous electrolyte secondary battery after the pre-treatment was charged and discharged under the following conditions.

Charging conditions: constant current constant voltage (CCCV) charging, charging current of 200 µA, charging voltage of 3.1 V, charging time of 2 h. The non-aqueous electrolyte secondary battery was cooled from room temperature to -40°C by starting cooling after the start of charging.

Discharging conditions: constant current (CC) discharging, discharging current of 25 µA, termination voltage of 2.0 V, and -40°C.

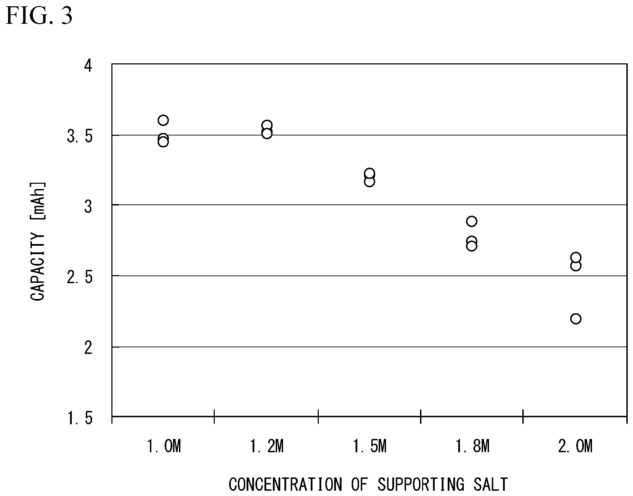

The number of samples in each test example was set to 3. The measurement results of the supporting salt concentration and the discharge capacity in each test example are shown in the graph of FIG. 3.

As shown in FIG. 3, in a case where the supporting salt concentration was in a range of 1.0 to 1.5 mol/L (Test Examples 10 to 12), the discharge capacity was maintained and the variation was small. On the other hand, under the conditions of 1.8 mol/L and 2.0 mol/L (Test Examples 13 and 14), the decrease in the discharge capacity was large, and the variation was also large.

From the above, it can be seen that, in a case where an electrode in which the capacity balance, Li/SiO, and Li/LMO were adjusted to be in the above-described ranges was used and an electrolyte solution having the above-described supporting salt concentration was used, the discharge capacity could be maintained in a low-temperature environment.

### INDUSTRIAL APPLICABILITY

According to the present invention, it is possible to provide a non-aqueous electrolyte secondary battery in which a sufficient discharge capacity is obtained and overdischarge characteristics are excellent. The present invention can also contribute to the improvement of the performance of various electronic apparatuses and the like by being applied to, for example, a non-aqueous electrolyte secondary battery used in various fields of electronic apparatuses and the like.

### REFERENCE SIGNS LIST

1 Non-aqueous electrolyte secondary battery
2 Housing container
10 Positive electrode
12 Positive electrode can
12a Opening portion
20 Negative electrode
22 Negative electrode can
30 Separator
40 Gasket
50 Electrolyte solution

## Claims

1. A non-aqueous electrolyte secondary battery comprising:
a positive electrode containing a lithium manganese oxide (LMO) as a positive electrode active material;
a negative electrode containing a lithium (Li) and SiO_{X} (0 ≤ X < 2) as a negative electrode active material; and
an electrolyte solution containing an organic solvent and a supporting salt,
wherein a capacity balance represented by a capacity of the negative electrode and a capacity of the positive electrode {negative electrode capacity (mAh)/positive electrode capacity (mAh)} is in a range of 1.56 to 2.51,
a molar ratio (Li/SiO_{X}) of the lithium (Li) to the SiO_{X} (0 ≤ X < 2) in the negative electrode active material is in a range of 3.8 to 4.9, and
a molar ratio (Li/LMO) of the lithium (Li) to the lithium manganese oxide (LMO) is 8.0 or less.

2. The non-aqueous electrolyte secondary battery according to Claim 1, wherein the positive electrode contains at least Li₁₊ₓCo_{y}Mn_{2-x-y}O₄ (0 ≤ x ≤ 0.33, 0 < y ≤ 0.2) as the lithium manganese oxide used in the positive electrode active material.

3. The non-aqueous electrolyte secondary battery according to Claim 1, wherein at least a part of a surface of the SiOₓ (0 ≤ X < 2) is coated with carbon.

4. The non-aqueous electrolyte secondary battery according to Claim 1, wherein the electrolyte solution contains, as the organic solvent, a mixed solution containing propylene carbonate (PC), ethylene carbonate (EC), and dimethoxyethane (DME) in a range of a volume ratio {PC:EC:DME} = {0.5 to 1.5:0.5 to 1.5:1 to 3}, and contains, as the supporting salt, lithium bis(fluorosulfonyl)imide (LiFSI) at 0.6 to 1.5 (mol/L).

5. The non-aqueous electrolyte secondary battery according to Claim 1, further comprising:
a separator disposed between the positive electrode and the negative electrode; and
a housing container in which the positive electrode, the negative electrode, the separator, and the electrolyte solution are disposed in an internal accommodating space.

6. The non-aqueous electrolyte secondary battery according to Claim 5,
wherein the housing container is a coin type container including
a positive electrode can having a bottomed cylindrical shape, and
a negative electrode can fixed to an opening portion of the positive electrode can with a gasket interposed between the negative electrode can and the positive electrode can, and forming the accommodating space between the positive electrode can and the negative electrode can.
